# EUROPÄISCHE PATENTANMELDUNG

(11) **EP 1 939 370 A2**
(43) Veröffentlichungstag der Anmeldung: **02.07.2008**
(21) Anmeldenummer: 07024979.2
(22) Anmeldetag: 21.12.2007
(51) Int. Cl.: E04B 1/76

(54) **Dämmelement**

(30) Priorität: 29.12.2006 CH 21272006
(71) Anmelder: Viol, Michael, 5261 Helpfau-Uttendorf (AT)
(72) Erfinder: Bauer, Andreas, 4810 Gmunden (AT)
(74) Vertreter: Römpler, Aldo

(57) **Zusammenfassung**

Das Dämmelement (1) weist eine Hülle (2) auf, die mit losem, körnigem und/oder schotterförmigem Füllgut gefüllt ist, vorzugsweise Schaumglas (3). Die Hülle (2) weist sinnvollerweise die Form eines Hexaeders auf, so dass das Dämmelement (1) gut eingebaut werden kann. Vorteilhaft ist in der Hülle (2) eine Öffnung (4) vorhanden, durch die auch auf der Baustelle ein Nachfüllen oder ein Verringern der Füllung zwecks Reduzieren des Volumens möglich ist. Die Öffnung (4) kann durch ein Verschluss (5), zum Beispiel einem Klettverschluss, wieder schliessbar sein. Dieses Dämmelement ermöglicht die Verwendung und die Nutzung der guten Dämmeigenschaften von Schaumglas (3). Dabei wird jedoch kein starrer und auf der Baustelle kaum oder nur unter Schwierigkeiten bearbeitbarer Formkörper bereitgestellt, sondern eine spezielle, mit losem Schaumglas (3) gefüllte, flexible Hülle (2). Das Dämmelement (1) ist an beliebiger Stelle der Bautechnik einsetzbar, nicht nur im Hochbau.

## Beschreibung

Die vorliegende Erfindung betrifft ein Dämmelement.

In der Bautechnik werden zur Wärme- und/oder Schalldämmung verschiedenste Formplatten verwendet. Gewöhnlich bestehen diese aus einem auf der Baustelle passend zugeschnittenen, starren Formkörper. Ebenso gibt es faser- oder wollförmige Dämmungen, die werkseitig auf einer Folie, zum Beispiel aus Papier aufgebracht sind. Bekannt ist es auch, faser- oder wollförmige Dämmstoffe in zuvor abgedichtete oder ausgekleidete Hohlräume zu füllen und diese anschliessend zu verschliessen. Hierzu wurden Zellulosefaserdämmstoffe vorgeschlagen. Allerdings hat sich dieses Verfahren als zu kompliziert und teuer erwiesen. Schliesslich gibt es Wärmedämmplatten auf der Basis eines Kieselsäure-Aerogels, die in einer Vakuumkammer evakuiert und gasdicht in eine mehrschichtige Verbundfolie eingeschweisst sind. Der so erhaltene Formkörper ist allerdings nur dort einsetzbar, wo keine genaue Masshaltigkeit gefordert ist, denn er lässt sich auf der Baustelle nicht mehr bearbeiten und einpassen. Für bereits ausgebaute Innenwände oder Dachräume sind diese Formkörper darum gänzlich unbrauchbar. Ein weiterer, sehr guter Dämmstoff wäre Schaumglas. Unter dem Markennamen Millcell ist zum Beispiel ein aus Deponie-Altglas energiearm hergestelltes Schaumglas bekannt geworden, das hervorragende Dämmeigenschaften aufweist. Schaumglasplatten sind jedoch ebenfalls kaum für Innendämmungen geeignet, da ebenfalls grössere Probleme bei deren Einpassung auftauchen. Deren Schneiden oder Sägen ist gegenüber Formplatten aus anderen Dämmstoffen deutlich schwieriger. Man denke dabei an den dabei anfallenden Staub.

Auf der Grundlage dieser Erkenntnisse setzt sich die Erfindung die Aufgabe, ein Dämmelement zu schaffen, das unter anderem nicht nur von der Gebäudeaussenseite her, sondern auch für die Wärme- und/oder Schalldämmung im Gebäudeinneren oder von der Gebäudeinnenseite her geeignet ist.

Das erfindungsgemässe Dämmelement entspricht den kennzeichnenden Merkmalen des Patentanspruchs 1. Weitere vorteilhafte Ausbildungen des Erfindungsgedankens sind aus den abhängigen Patentansprüchen ersichtlich.

Das erfindungsgemässe Dämmelement ermöglicht auch die Verwendung und die Nutzung der guten Dämmeigenschaften von Schaumglas. Dabei wird jedoch kein starrer und auf der Baustelle kaum oder nur unter Schwierigkeiten bearbeitbarer Formkörper bereitgestellt, sondern eine spezielle, mit Schaumglas im losen, beispielsweise gebrochenen Zustand gefüllte, flexible Hülle. Dadurch lässt sich nun Schaumglas, das bisher weder als Platte noch als Schotter für den erfindungsgemässen Zweck sinnvoll einsetzbar war, sehr gut handhaben und beispielsweise auf einfache, schnelle, effektive, saubere und insbesondere staubfreie Weise selbst in ungleichmässige Zwischenräume von Dachsparren oder Wand- und Bodenkonstruktionen und dergleichen einbauen. Das Dämmelement ist besonders leicht. Es kann in diversen Grössen bereitgestellt und bietet darüber hinaus eine hohe, sich jeder Unebenheit anpassende Flexibilität, so dass sich jeder Zwischenraum optimal ausfüllen lässt. Das Schaumglas ist zudem, im Vergleich mit einigen anderen Dämmstoffen, unbrennbar, unverrottbar sowie tierbiss- und schädligsresistent. Das erfindungsgemässe Dämmelement kann schliesslich auch dort mit Erfolg eingesetzt werden, wo eine Kältedämmung gewährleistet werden soll, zum Beispiel bei Lager- und Kühlräumen. Weitere Einsatzgebiete können aber auch im Tiefbau und Leitungsbau sein, beispielsweise im Bereich von Fernwärmeleitungen.

Nachfolgend werden bevorzugte Ausführungsbeispiele der Erfindung anhand der Zeichnung näher beschrieben.
- Fig. 1 - 2: zeigen verschiedene Ausführungen des Dämmelementes;
- Fig. 3 - 4: zeigen Einbaumöglichkeiten des Dämmelementes nach den Fig. 1 und 2.

Das Dämmelement 1 weist in der vorliegenden Ausführung eine kissen- oder polsterartige Hülle 2 auf, die mit losem, beispielsweise gebrochenen Schaumglas 3 locker gefüllt ist. Die Hülle 2 weist sinnvollerweise die Form eines Hexaeders auf, so dass das Dämmelement 1 gut eingebaut werden kann. Das Schaumglas 3 ist körnig oder schotterförmig. Vorzugsweise ist in der Hülle 2 eine Öffnung 4 vorhanden, durch die auch auf der Baustelle ein Nachfüllen von Schaumglas 3 oder ein Verringern der Füllung zwecks Reduzieren des Volumens möglich ist. Die Öffnung 4 kann durch ein Verschluss 5, zum Beispiel einem Klettverschluss, wieder schliessbar sein.

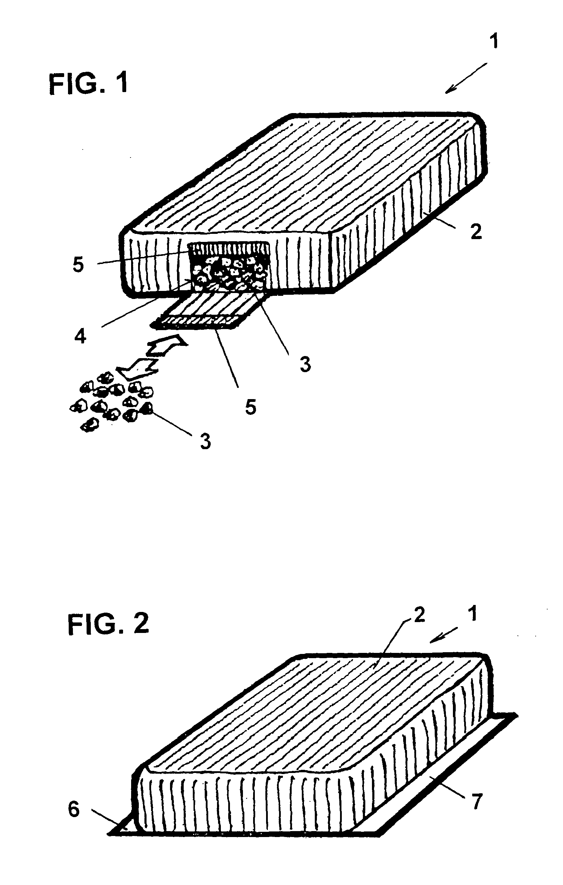

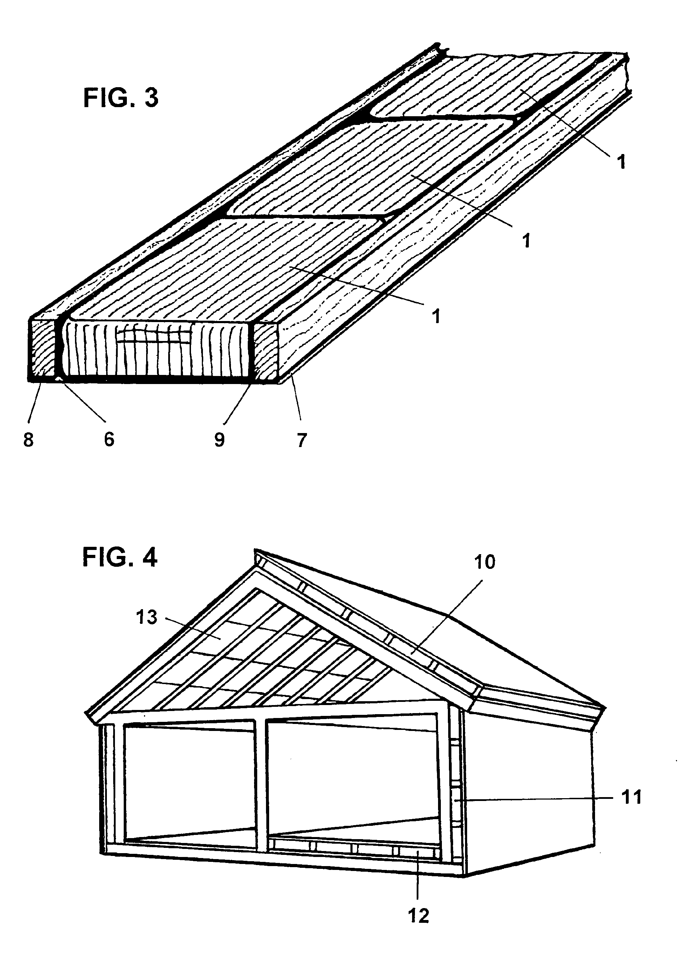

Gemäss Fig. 2 sind zudem vorteilhaft seitliche Laschen 6 und 7 vorhanden. Dank diesen Laschen 6 und 7, die vorzugsweise entlang von zwei einander gegenüber liegenden Kanten der Hülle 2 verlaufen, kann das Dämmelement 1 leicht befestigt werden. In der Darstellung nach Fig. 3 ist eine Reihe von Dämmelementen 1 Stoss an Stoss zwischen zwei Dachsparren 8 und 9 angeordnet. Die Laschen 6 und 7 können einfach auf die Unterseite der Dachsparren 8 und 9 gelegt und dort fixiert werden. Dies kann schnell und rationell durch Antackern erfolgen. Es ist also nicht mehr notwendig, wie das bisher besonders bei flexiblen Dämmstoffen üblich war, entlang der einander zugewandten Seiten der Dachsparren 8 und 9 mühsam Halteprofile zu befestigen, um das Dämmelement 1 dort festzuhalten. Es können zudem auch Laschen 6 und 7 vorgesehen sein, um benachbarte Dämmelemente 1 miteinander verbinden zu können.

Einige Beispiele, wo das erfindungsgemässe Dämmelement 1 einsetzbar ist, sind der Fig. 4 zu entnehmen, nämlich zur Dachsanierung 10, Wanddämmung 11, Bodendämmung 12 und beim Innenausbau 13. Es versteht sich, dass das Dämmelement 1 darüber hinaus auch an anderer Stelle im Hoch- und im Tiefbau sowie in beliebigen Bereichen der Bautechnik eingesetzt werden kann.

Insbesondere für den vertikalen Einsatz ist es von Vorteil, wenn die Hülle 2 eine gewisse Formstabilität aufweist. Zum Beispiel kann sie abgesteppt oder mit anderen Mitteln stabilisiert sein. Das Material der Hülle 2 ist zudem für den Einsatz in Gebäuden vorzugsweise nicht oder nur sehr schwer entflammbar und auch bezüglich des Qualmverhaltens mit Bedacht zu wählen. Es kann beispielsweise ein atmungsaktives Material verwendet werden.

Selbstverständlich kann das Dämmelement 1, beziehungsweise die Hülle 2, im Rahmen der Erfindung auch anders als gezeichnet und vorgehend beschrieben ausgebildet werden. Das bezieht sich auf die Form, die Proportionen, die Ausbildung der Laschen 6 und 7 oder auch auf die Korngrösse des eingefüllten Schaumglases. Nicht ausgeschlossen ist die Verwendung eines anderen Füllmaterials als Schaumglas oder auch von Mischungen verschiedener Füllmaterialien. Auch kann eine besondere Öffnung, für die fabrikmässige Befüllung vorgesehen werden. Diese könnte ferner einen Schlauch zum Ansetzen an einen Fülltrichter oder Füllstutzen aufweisen.

## Patentansprüche

1. Dämmelement, **gekennzeichnet durch** eine Hülle (2), die mit losem, körnigem und/oder schotterförmigem Füllmaterial (3) gefüllt ist.

2. Dämmelement nach Anspruch 1, **dadurch gekennzeichnet, dass** das Füllmaterial mindestens teilweise aus Schaumglas (3) besteht.

3. Dämmelement nach Anspruch 1 oder 2, **dadurch gekennzeichnet, dass** die Hülle (2) die Form eines Hexaeders aufweist.

4. Dämmelement nach einem der Ansprüche 1 - 3, **dadurch gekennzeichnet, dass** die Hülle (2) mit mindestens einer Öffnung (4) versehen ist.

5. Dämmelement nach Anspruch 4, **dadurch gekennzeichnet, dass** die Öffnung (4) mit einem Verschluss (5) versehen ist, zum Beispiel einem Klettverschluss.

6. Dämmelement nach Anspruch 4 oder 5, **dadurch gekennzeichnet, dass** die Öffnung (4) mit einem Füllschlauch versehen ist.

7. Dämmelement nach einem der Ansprüche 1 - 6, **dadurch gekennzeichnet, dass** die Hülle (2) mit mindestens einer Lasche (6, 7) versehen ist, mit dem Zweck, das Dämmelement (1) an einem Bauwerk und/oder an einem benachbarten, zweiten Dämmelement (1) befestigen zu können.

8. Dämmelement nach Anspruch 7, **dadurch gekennzeichnet, dass** die Hülle (2) an mindestens zwei einander gegenüber liegenden Kanten mit einer Lasche (6, 7) versehen ist.

9. Dämmelement nach einem der Ansprüche 1 - 8, **dadurch gekennzeichnet, dass** die Hülle (2) mindestens teilweise aus einem flexiblen Material besteht.

10. Dämmelement nach einem der Ansprüche 1 - 9, **dadurch gekennzeichnet, dass** die Hülle (2) aus einem nicht brennbaren Material besteht.

11. Dämmelement nach einem der Ansprüche 1 - 10, **dadurch gekennzeichnet, dass** die Hülle (2) Mittel zur Sicherung der Formstabilität aufweist, zum Beispiel abgesteppt ist.
